Europäisches Patentamt

European Patent Office

Office européen des brevets

(19)

(11) Numéro de publication : **0 107 544**
**B1**

(12) **FASCICULE DE BREVET EUROPÉEN**

(45) Date de publication du fascicule du brevet :
30.12.86

(51) Int. Cl.⁴ : **B 01 D 15/08**, G 01 N 30/28

(21) Numéro de dépôt : **83401880.6**

(22) Date de dépôt : **27.09.83**

(54) Installation automatique pour chromatographie liquide.

(30) Priorité : **28.09.82 FR 8216302**

(43) Date de publication de la demande :
**02.05.84 Bulletin 84/18**

(45) Mention de la délivrance du brevet :
**30.12.86 Bulletin 86/52**

(84) Etats contractants désignés :
**BE CH DE FR GB IT LI LU NL SE**

(56) Documents cités :
**DE-A- 3 030 069**
**FR-A- 2 388 585**
**US-A- 2 692 820**
**US-A- 3 701 609**
**US-A- 3 826 905**
**US-A- 4 116 046**
**FRESENIUS' ZEITSCHRIFT FÜR ANALYTISCHE CHE-**
**MIE, vol. 261, fasc. 4/5, 1972, BERLIN (DE), W.**
**KOCHEN et al.: "Über eine elektronisch gesteuerte**
**Anlage für die präparative und analytische Flüs-**
**sigkeits-Säulen-Chromatographie", pages 342-347**
**INTERNATIONAL LABORATORY, vol. 9, no. 11/12,**
**novembre/décembre 1979, FAIRFIELD, Conn. (US), J.**
**CODINA: "An automatic fraction-separating system**
**for LC", pages 63-66**
**MEASUREMENT TECHNIQUES, vol. 17, no. 11, novem-**
**bre 1974, NEW YORK (US), A.M. BUNYAK et al.:**
**"Resonant LC circuit as a contactless conductome-**
**tric converter", pages 1764-1767**

(73) Titulaire : **PHARMUKA LABORATOIRES**
**35 Quai du Moulin de Cage**
**F-92231 Gennevilliers (FR)**

(72) Inventeur : **Girot, Pierre Noel**
**7, rue du Terrage**
**F-75010 Paris (FR)**
Inventeur : **Boschetti, Egisto**
**5, rue du Docteur Rochefort**
**F-78400 Chatou (FR)**

(74) Mandataire : **Joly, Jean-Jacques et al**
**CABINET BEAU DE LOMENIE 55, rue d'Amsterdam**
**F-75008 Paris (FR)**

Jouve, 18, rue St-Denis, 75001 Paris, France

## Description

La présente invention a pour objet une installation automatique pour chromatographie liquide, installation du type comportant au moins une colonne de chromatographie, un récipient à produit à fractionner et au moins un récipient à éluant, ces récipients pouvant être mis en communication avec le sommet de la colonne par l'intermédiaire d'une pompe d'injection, des vannes d'alimentation commandées automatiquement montées entre la pompe d'injection et, respectivement, chacun des récipients à produit à fractionner et à éluant, un dispositif de détection branché en sortie de la colonne et fournissant au moins un signal de mesure représentatif d'une caractéristique du liquide sortant de la colonne, un dispositif de collection de fractions avec au moins un récipient collecteur pouvant être mis en communication avec le bas de la colonne et une unité de commande recevant le signal de mesure et comprenant des moyens de commande du dispositif de collection de fractions.

La chromatographie est un procédé de séparation de constituants d'un mélange, procédé qui peut être utilisé à des fins analytiques ou industrielles.

Le domaine d'application de l'invention est plus particulièrement, mais non exclusivement, celui de la chromatographie industrielle.

Dans ce cas, il s'agit d'une technique de production par extraction d'un ou plusieurs produits connus à partir d'un mélange qui les contient. A titre indicatif, la chromatographie industrielle peut être utilisée pour la séparation de protéines, par exemple pour l'extraction d'albumine du plasma sanguin. Il est courant dans ce cas d'utiliser des colonnes ayant un volume de plusieurs dizaines de litres, voire de plusieurs centaines de litres. Ces installations n'ont pas de commune mesure avec les appareils utilisés en chromatographie analytique ; de plus, alors que la chromatographie analytique a pour but de séparer des constituants souvent très nombreux d'un mélange en vue de les identifier et de mesurer leur proportion dans le mélange, la chromatographie industrielle a pour but d'extraire un nombre restreint de produits d'un mélange dont on sait qu'il les contient.

En chromatographie industrielle, la préparation des colonnes nécessite une grande minutie et un temps extrêmement long. De plus, les produits en cause peuvent être d'un coût très élevé — c'est le cas du plasma humain —. Pour ces raisons, les installations demandent une surveillance constante réalisée à l'heure actuelle par un personnel qualifié afin d'éviter tout incident pouvant conduire à une dégradation de la colonne ou à une perte de produit. Il est donc souhaitable, pour abaisser les coûts de production, d'automatiser de telles installations.

Différents systèmes automatiques ont déjà été proposés dans le domaine de la chromatographie.

Ainsi, il est connu d'utiliser des dispositifs de lecture automatique d'un chromatogramme afin de déterminer notamment la quantité de fraction correspondant à chaque pic.

Il est connu également de recueillir automatiquement les différentes fractions en comparant le signal de mesure produit par le dispositif de détection avec un seuil donné, afin de mettre la colonne en communication avec un récipient collecteur lorsque le signal de mesure franchit ce seuil, et d'amener un nouveau récipient collecteur en position de prélèvement pour recueillir la fraction suivante. Les récipients collecteurs sont disposés sur un transporteur, par exemple un plateau rotatif, qui est mû pas à pas.

D'autres systèmes automatiques ont également été décrits dans les brevets US-A-3 701 609 et US-A-3 826 905 et l'article de Codina, International Laboratory, vol. 9, n° 11/12, pages 63-66, 1979, Fairfield, Conn. (US).

Ces systèmes automatiques n'intéressent qu'une partie du processus global. On a alors recherché à réaliser une automatisation plus poussée et il a été proposé à cet effet d'utiliser une horloge préprogrammée fournissant différents signaux de commande à des intervalles de temps prédéterminés pour réaliser un cycle de chromatographie. Les instants auxquels différentes opérations — telles qu'injection du produit à fractionner, admission de l'éluant, recueil d'une fraction — doivent être réalisées sont prédéterminés à partir d'un modèle. On conçoit alors que des résultats satisfaisants ne peuvent être obtenus que si les conditions opératoires ne s'écartent pas de celles du modèle. Or, il n'en est pratiquement jamais ainsi du fait que des paramètres tels que la perte de charge de la colonne ne sont pas contrôlables et sont sujets à variations.

La présente invention a pour but de fournir une installation de chromatographie liquide entièrement automatisée et capable de réaliser des cycles successifs de chromatographie sans que les résultats soient affectés par des variations de paramètres opératoires tel que le débit de liquide dans la colonne.

La présente invention a aussi pour but de fournir une installation de chromatographie liquide ne nécessitant qu'une surveillance très légère par un opérateur sans risque de dégradation de la colonne ou de perte de produit.

Ces buts sont atteints grâce à une installation du type défini en tête de la description et dans laquelle, conformément à l'invention :

un détecteur de niveau est associé à chacun des récipients à produit à fractionner et à éluant pour fournir un signal de niveau bas lorsque le niveau de liquide dans le récipient devient inférieur à un seuil prédéterminé,

au moins une vanne de sortie (V20 à V26) commandée automatiquement est montée entre la colonne (18) et le (ou les) récipient(s) collecteur(s) (20 à 26),

un dispositif doseur est associé au récipient à produit à fractionner pour permettre l'injection dans la colonne à chaque fois d'une dose déterminée de ce produit, et,

l'unité de commande comporte : un dispositif de commande qui reçoit le ou chaque signal de mesure fourni par le dispositif de détection et qui commande, d'une part, les vannes d'alimentation et de sortie et, d'autre part, le dispositif doseur pour réaliser des cycles de chromatographie successifs comprenant chacun au moins les opérations consécutives d'injection dans la colonne d'une dose déterminée de produit à fractionner, d'admission d'éluant et de recueil d'une fraction ; et un dispositif de sécurité relié aux détecteurs de niveau pour commander l'arrêt de la pompe et interdire l'admission de produit à fractionner ou d'éluant dans la colonne lorsque le détecteur de niveau correspondant produit un signal de niveau bas.

Ainsi, les différentes opérations réalisées au cours d'un cycle ne sont pas commandées à des intervalles de temps fixés à l'avance mais sont effectuées à des instants déterminés en fonction des informations fournies par le dispositif de détection. Par ailleurs, l'utilisation d'un doseur permet de réaliser automatiquement des cycles successifs sans intervention de l'opérateur autre que celles nécessaires pour périodiquement remplir les récipients à produit à fractionner et à éluant et vider le ou les récipients collecteurs. De plus, le dispositif de sécurité évite une injection accidentelle d'air, ce qui mettrait la colonne hors d'usage.

De préférence, le dispositif de détection comporte plusieurs détecteurs pour fournir différents signaux de mesure représentatifs de différentes caractéristiques du liquide sortant de la colonne.

Le dispositif de commande comprend, de façon en soi connue, un comparateur pour déclencher le recueil d'une fraction lorsqu'un signal de mesure fourni par le dispositif de détection franchit dans un sens un premier seuil prédéterminé réglable. Avantageusement, le dispositif de commande comprend un second comparateur pour interrompre le recueil de la fraction lorsque le signal de mesure franchit dans l'autre sens un second seuil prédéterminé réglable indépendamment du premier. Par rapport aux systèmes de prélèvement connus dans lesquels un seul et même seuil est utilisé pour déclencher et interrompre le recueil d'une fraction, ce système à deux seuils indépendants permet de régler librement la fraction d'un « pic » du signal de mesure pendant laquelle le recueil a lieu. Il s'agit là d'une particularité intéressante lorsque l'on sait que, dans certains cas, il est souhaitable de limiter le recueil de la fraction à une partie d'un pic, par exemple pour éviter de recueillir des produits gênants en plus de celui recherché.

Avantageusement encore, le dispositif de commande comprend des moyens qui commandent l'admission d'un éluant dans la colonne et des moyens de détection d'équilibrage de la colonne avec cet éluant, lesdits moyens réagissant à au moins un signal de mesure pour commander l'injection d'une dose de produit à fractionner. Ces moyens de détection d'équilibrage comportent un dispositif de comparaison recevant ce signal de mesure et fournissant un signal de sortie lorsque l'amplitude du signal de mesure est comprise dans une place déterminée réglable. Le signal de mesure utilisé peut être par exemple représentatif du pH et/ou de la concentration du liquide sortant de la colonne.

La récupération séparée de plusieurs fractions différentes sur une même colonne est réalisée, après injection du produit à fractionner, en faisant circuler successivement plusieurs éluants dont les pouvoirs d'élution vont en augmentant. Aussi, selon une autre particularité de l'installation conforme à l'invention, celle-ci comporte plusieurs récipients à éluant et le dispositif de commande reçoit le ou les signaux de mesure du dispositif de détection pour commander des cycles successifs comprenant chacun : l'injection d'une dose déterminée de produit à fractionner, l'admission d'un premier éluant dans la colonne, le recueil d'une première fraction, l'admission d'un deuxième éluant dans la colonne, le recueil d'une deuxième fraction, le cas échéant au moins un sous-cycle supplémentaire comprenant l'admission d'un autre éluant dans la colonne et le recueil de la fraction correspondante, et enfin l'admission du premier éluant dans la colonne pour rééquilibrer celle-ci avant le début du cycle suivant.

L'admission d'éluant est par exemple commandée en réponse à la fin de l'injection du produit à fractionner ou à la fin du recueil d'une fraction.

Le recueil des différentes fractions est réalisé dans des récipients collecteurs différents. On pourrait disposer les différents récipients collecteurs sur un dispositif transporteur amenant ceux-ci successivement en position de prélèvement, une seule vanne de sortie étant prévue pour mettre la colonne en communication avec les différents récipients collecteurs. Toutefois, s'agissant d'installations de chromatographie industrielle, les volumes traités sont relativement importants et il est alors préférable d'utiliser plusieurs récipients collecteurs à poste fixe, en nombre au moins égal à celui des fractions à recueillir. Chaque récipient collecteur peut être mis en communication avec la colonne soit au moyen d'une vanne de sortie commune avec interposition d'un dispositif distributeur, soit au moyen d'une vanne de sortie particulière commandée par le dispositif de commande. Avantageusement, un détecteur de niveau est associé à chaque récipient collecteur pour fournir un signal de niveau haut lorsque le niveau de liquide dans le récipient devient supérieur à un seuil prédéterminé, et est relié au dispositif de sécurité pour interdire le recueil de ce liquide lorsque le signal de niveau haut est présent.

Ainsi, le processus est arrêté lorsqu'un récipient à produit à fractionner ou à éluant risque de se vider ou qu'un récipient collecteur risque de déborder. Les signaux de niveau peuvent aussi être utilisés pour actionner un avertisseur indiquant à l'opérateur que le remplissage ou la vidange d'un récipient est nécessaire.

D'autres particularités et avantages de l'installation conforme à l'invention ressortiront à la lecture de la description faite ci-après, à titre indicatif mais non limitatif, en référence aux dessins annexés sur lesquels :

la figure 1 est un schéma général d'un mode de réalisation d'une installation de chromatographie selon l'invention,

la figure 2 est un schéma d'un mode de réalisation du détecteur de concentration de l'installation de la figure 1,

la figure 3 est un schéma général d'un mode de réalisation de l'unité de commande de l'installation de la figure 1,

les figures 4 à 7 sont des schémas particuliers de différents circuits de l'unité de commande représentée sur la figure 3,

la figure 8 est un diagramme des signaux reçus et émis par l'unité de commande dans le cas d'une chromatographie à six paliers, et

la figure 9 est un diagramme des signaux reçus et émis par l'unité de commande dans le cas d'une opération de dessalage.

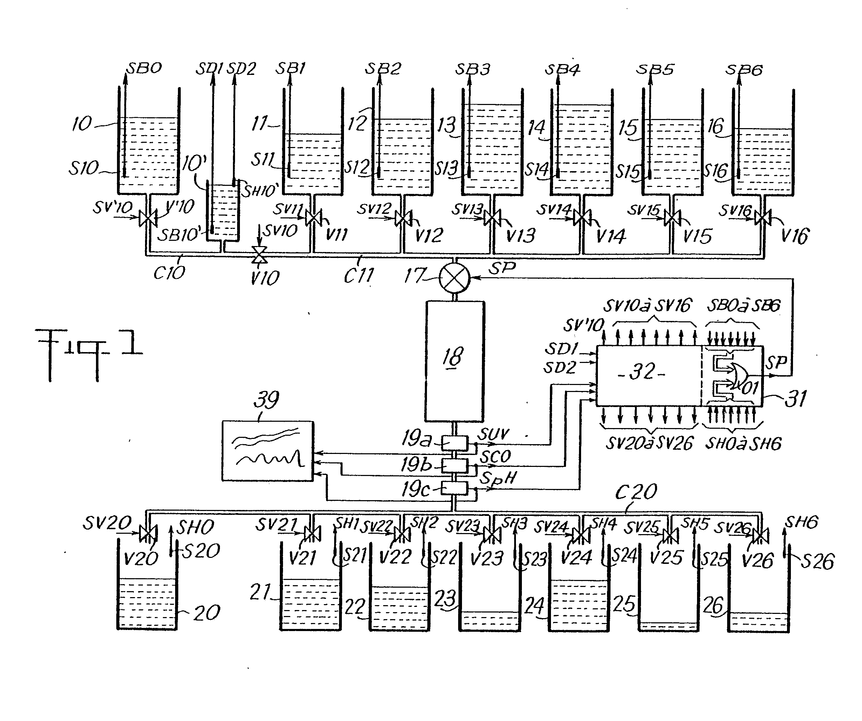

L'installation représentée sur la figure 1 comprend un récipient 10 à produit à fractionner, auquel est associé un flacon doseur 10', et plusieurs récipients à éluant 11 à 16. Une électrovanne V'10 est montée sur une conduite C10 reliant le récipient 10 au doseur 10'. Ce dernier et les récipients à éluant peuvent être mis en communication avec une colonne de chromatographie 18 par l'intermédiaire d'une conduite C11 et d'une pompe d'injection 17. Entre la conduite C11 et le doseur 10' et chacun des récipients 11 à 16 sont interposées des électrovannes respectives V10 à V16. Un dispositif de détection comprenant plusieurs détecteurs 19a, 19b, 19c est disposé à la sortie de la colonne. En aval de ces détecteurs, la colonne 18 est reliée à une conduite C20. Des récipients collecteurs 20 à 26 peuvent être mis en communication avec la conduite C20 par l'intermédiaire d'électrovannes respectives V20 à V26. Le récipient 20 est destiné à recueillir la partie mise au rebut tandis que les récipients 21 à 26 sont destinés à recueillir les éluants contenant les produits à récupérer. Chacun des récipients 10 à 16 est muni d'une sonde de niveau, respectivement S10 à S16, destinée à fournir un signal (SB0 à SB6) lorsque le niveau de liquide dans le récipient devient inférieur à un seuil minimum prédéterminé correspondant à l'emplacement de la sonde dans le récipient. Des sondes similaires S20 à S26 sont placées dans les récipients 20 à 26 mais sont destinées à fournir un signal (SH0 à SH6) lorsque le niveau de liquide dans le récipient devient supérieur à un seuil maximum prédéterminé. Deux autres sondes SB10' et SH10' sont placées dans le récipient doseur 10 à des hauteurs différentes, la différence de niveau entre la sonde basse SB10' et la sonde haute SH10' déterminant le volume d'une dose de produit à fractionner.

Une unité de commande 30 comprend un dispositif de sécurité 31 qui reçoit les signaux SB0 à SB6 des sondes S10 à S16 et les signaux SH0 à SH6 des sondes S20 à S26 et qui délivre un signal SP à la pompe 17 pour bloquer le fonctionnement de celle-ci afin d'interdire le soutirage dans un des récipients 10 à 16 lorsque, dans ce récipient, le seuil de niveau minimum est franchi et d'interdire le remplissage d'un des récipients 20 à 26 lorsque, dans ce récipient, le seuil de niveau maximum est franchi. Les signaux SB0 à SB6 et SH0 à SH6 sont reçus par une porte O1 de type OU qui délivre le signal SP sur sa sortie. Un capteur de pression peut être disposé entre la pompe 17 et le haut de la colonne 18 pour fournir sur une entrée de la porte O1 un signal destiné à commander l'arrêt de la pompe en cas de surpression anormale. L'unité 30 comprend en outre un dispositif de commande 32 qui reçoit les signaux SD1 et SD2 produits par les sondes SB10' et SH10' ainsi que des signaux de mesure SUV, SC0 et SpH fournis par les détecteurs 19a, 19b et 19c et représentatifs de différentes caractéristiques du liquide sortant de la colonne. En réponse aux signaux reçus, le dispositif 32 commande les électrovannes V'10, V10 à V16 et V20 à V26 par l'intermédiaire de signaux respectifs SV'10, SV10 à SV16 et SV20 à SV26.

Enfin, les signaux SUV, SC0 et SpH sont également transmis à un enregistreur graphique 39 à plusieurs voies.

En chromatographie liquide industrielle classique, on procède généralement de la façon suivante. Avant le début d'un cycle, c'est-à-dire avant l'injection d'une dose de produit à fractionner, la colonne est équilibrée avec le premier éluant. A cet effet, on fait circuler le premier éluant dans la colonne jusqu'à ce que le liquide en sortie de la colonne présente substantiellement les mêmes caractéristiques que le premier éluant, par exemple un même pH et/ou une même force ionique. L'équilibrage de la colonne étant réalisé, on interrompt l'admission du premier éluant et on injecte une dose de produit à fractionner. Ensuite, on fait circuler différents éluants successivement en recueillant à chaque fois la fraction correspondante. Les éluants sont des solutions dont la composition chimique peut être identique ou différente avec des taux de concentration et de pH éventuellement différents. L'admission des éluants est le plus souvent réalisée dans l'ordre croissant des concentrations, le pouvoir d'élution étant dans ces cas d'autant plus élevé que la concentration est plus grande, alors qu'une telle règle n'est pas vraie pour le pH. Pour chaque éluant, on surveille un signal de mesure fourni par un détecteur et représentatif d'une caractéristique du liquide sortant de la colonne et on recueille la fraction correspondante pendant tout ou partie d'un pic du signal de mesure. Lorsque la dernière fraction a été recueillie, le premier éluant est à nouveau admis dans la colonne pour un ré-équilibrage de celle-ci en vue d'un nouveau cycle.

L'installation représentée sur la figure 1 permet la réalisation automatique des opérations indiquées ci-dessus. Dans l'exemple illustré, il est prévu six récipients à éluant 11 à 16 et six récipients collecteurs de fraction 21 à 26 correspondants. Bien entendu, le nombre de récipients à éluant et de récipients collecteurs de fraction pourra être choisi inférieur ou supérieur à six, selon les besoins. En outre, comme on le verra plus loin, il est possible d'envisager un préréglage simple de l'unité de commande pour faire fonctionner l'installation avec un nombre quelconque désiré d'éluants différents.

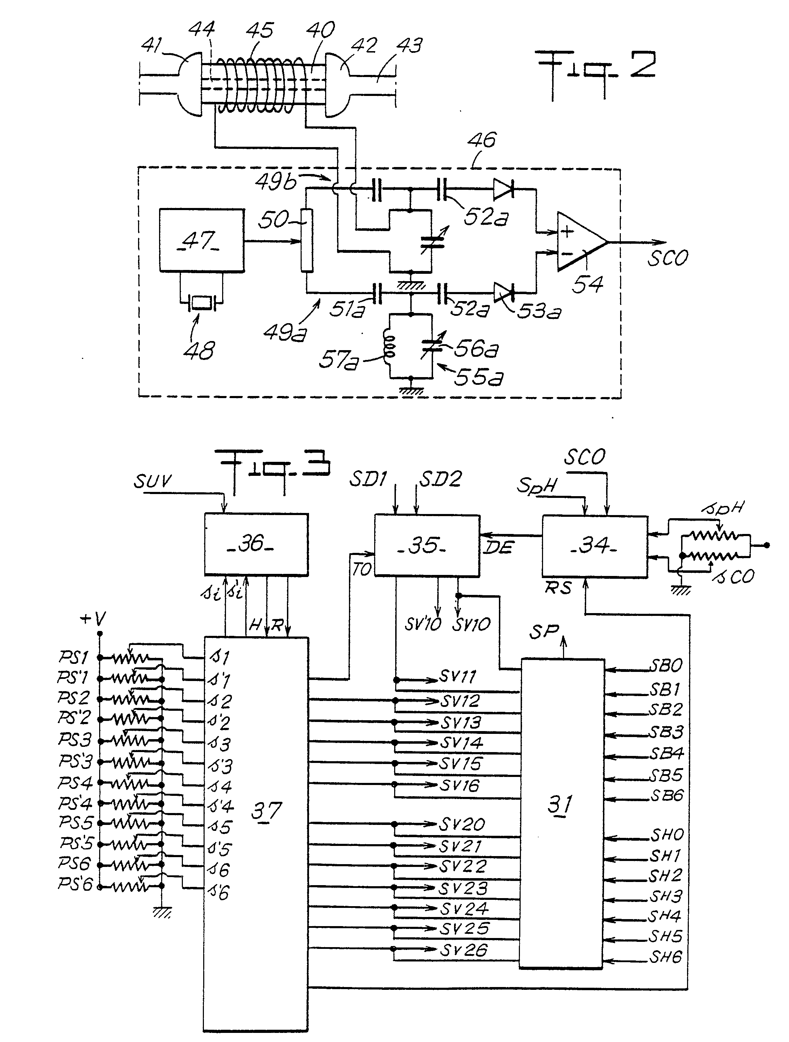

Les détecteurs 19a, 19b, 19c fournissent au dispositif de commande les informations nécessaires à la détection de l'équilibrage de la colonne et des pics. De préférence, plusieurs détecteurs de types différents sont utilisés. Un ou plus de ces détecteurs peuvent être affectés à la détection de l'équilibrage de la colonne tandis que la détection des pics est faite sur le signal d'au moins un autre détecteur. Pour la détection des pics, tout détecteur de type connu peut être utilisé, en fonction notamment de la nature des fractions à recueillir, par exemple un détecteur à ultra-violets 19a. Pour la détection de l'équilibrage de la colonne, il est possible d'utiliser une sonde de pH ou un détecteur d'ions. Dans l'exemple illustré, on utilise à la fois un détecteur d'ions 19b (ou détecteur de concentration) et un détecteur de pH 19c. Le détecteur de pH est une sonde de pH 19c de type connu en soi. Pour la détection de la concentration, on peut utiliser, comme connu en soi, un conductimètre plongé dans le liquide et fournissant un signal représentatif de la conductivité électrique du liquide. Toutefois, afin d'éviter tout phénomène d'électrolyse lié au passage d'un courant dans le liquide, le détecteur de concentration 19b peut être du type représenté sur la figure 2.

Ce détecteur comprend un tube 40 en matériau isolant, par exemple en verre, intercalé au moyen de raccords 41, 42 sur une canalisation 43 branchée en dérivation sur la conduite de sortie de la colonne. Le passage central 44 du tube 40 est parcouru par le liquide dont la concentration en ions est à mesurer. Ce passage 44 est de diamètre relativement faible (par exemple 1 à 2 mm). Une bobine 45 entoure le tube 40, une variation de concentration du liquide dans le tube provoquant une variation correspondante de l'inductance de la bobine. Celle-ci est connectée à un circuit 46 qui produit le signal SC0 représentatif de l'inductance de la bobine 45. Le circuit 46 comporte un oscillateur 47 stabilisé par un quartz 48 et fournissant un signal à haute fréquence appliqué de façon symétrique à deux branches 49a, 49b par l'intermédiaire d'un diviseur résistif 50. La branche 49a comprend, en série deux condensateurs 51a, 52a, et une diode 53a entre le diviseur 50 et une entrée d'un amplificateur différentiel 54. Un circuit résonant 55a formé d'un condensateur réglable 56a en parallèle sur une bobine 57a est branché entre le point commun aux condensateurs 51a, 52a et la masse. La branche 49b est branchée entre le diviseur 50 et l'autre entrée de l'amplificateur 54 et a une structure identique à celle de la branche 49a, la bobine du circuit résonant étant constituée par la bobine 45. Le déséquilibre entre les branches 49a et 49b traduit la valeur de la concentration en ions dans le liquide qui traverse le tube 40 et est transformé en un signal SC0 en sortie de l'amplificateur 54. Les circuits résonants sont accordés sur une fréquence légèrement différente de celle du signal fourni par l'oscillateur 47, le réglage étant tel que la plage de concentrations à mesurer corresponde à une partie sensiblement linéaire de la portion descendante (ou montante) de la courbe de résonance.

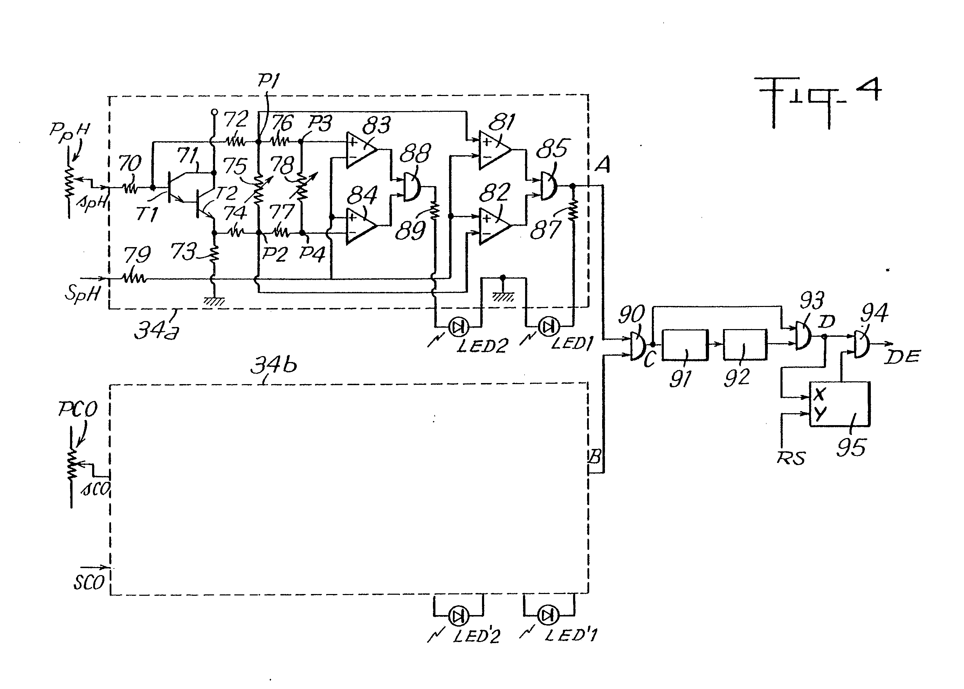

Le dispositif de commande 32 va maintenant être décrit plus en détail en référence aux figures 3 à 9.

Ce dispositif de commande comprend essentiellement un circuit 34 de détection d'équilibrage de la colonne 18, un circuit 35 de commande d'injection d'une dose de produit à fractionner, un circuit 36 de commande de recueil de fraction et un circuit de commutation 37.

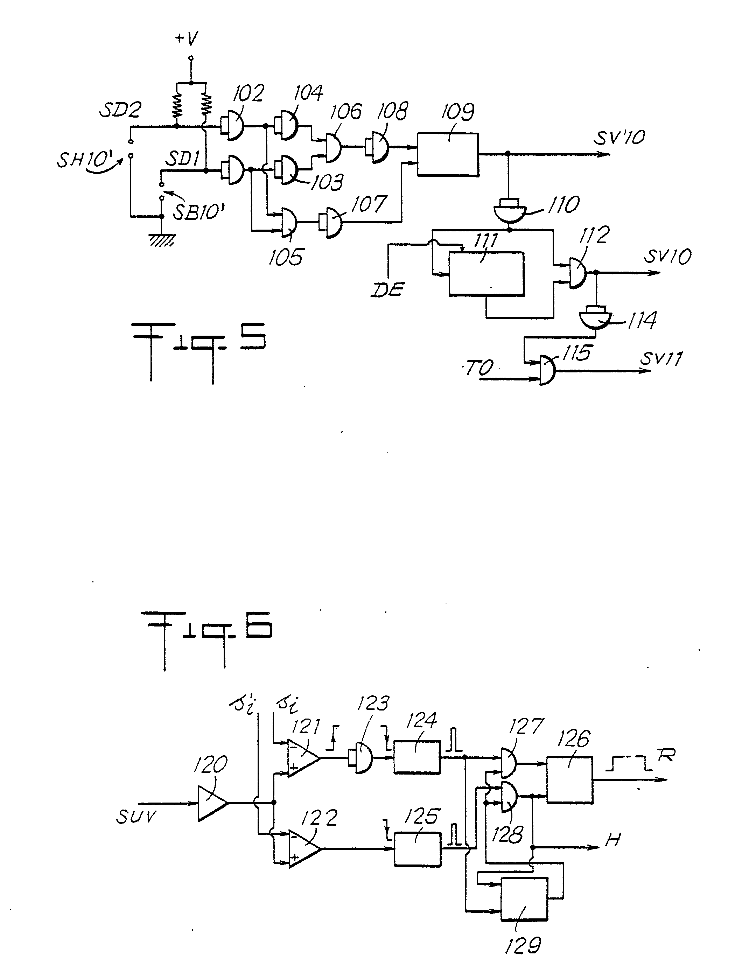

Le circuit 34 (figure 4) comprend un circuit 34a qui reçoit le signal de mesure SpH et un signal de référence spH fourni par un potentiomètre de réglage PpH, et un circuit 34b qui reçoit le signal de mesure SC0 et un signal de référence SC0 fourni par un potentiomètre de réglage PC0.

Dans le circuit 34a, le signal spH est appliqué par une résistance 70, d'une part à l'entrée d'un montage Darlington 71 à deux transistors T1, T2 et, d'autre part, à un nœud P1, à travers une résistance 72. En sortie du montage Darlington 71, le trajet émetteur-collecteur du transistor T2 est en série avec une résistance 73 entre une borne au potentiel + V et la masse tandis que l'émetteur de T2 est relié à un nœud P2 par une résistance 74. Une résistance réglable 75 est branchée entre P1 et P2. Grâce à ce montage, il existe entre les nœuds P1 et P2 une différence de potentiel $\Delta pH$ d'amplitude constante quel que soit le potentiel du point P1 ou P2. Le potentiomètre PpH permet de régler ce potentiel et donc de déplacer dans une plage de réglage donnée une « fenêtre » de potentiel de largeur donnée $\Delta pH$, cette largeur étant elle-même ajustable par action sur la résistance réglable 75. Les points P1 et P2 sont reliés par des résistances respectives 76, 77 à deux points P3, P4 entre lesquels est branchée une résistance réglable 78. Les résistances 76, 77 et 78 forment un diviseur de tension qui permet de définir entre les points P3 et P4 une seconde fenêtre de potentiel $\Delta pH'$ incluse dans la première. La largeur de cette seconde fenêtre est inférieure à celle de la première et réglable par la résistance 78. En outre, en choisissant des valeurs égales pour les résistances 76 et 77, la seconde fenêtre se situe au centre de la première. Les points P1 et P3 sont reliés respectivement aux entrées non inverseuses de deux amplificateurs 81, 83 tandis que les points P2 et P4 sont reliés respectivement aux entrées inverseuses de deux amplificateurs 82, 84. Le signal SpH est appliqué, par l'intermédiaire d'une résistance 79, aux entrées inverseuses des amplificateurs 81, 83 et aux entrées non- inverseuses des amplificateurs 82, 84. Les sorties des amplificateurs 81 et 82 sont reliées aux entrées d'une porte 85 de type ET, et une diode électroluminescente LED1 est branchée en série avec une résistance 87 entre la masse et la sortie de la porte 85. Enfin, les sorties des amplificateurs 83 et 84 sont reliées aux entrées d'une porte 88 de type ET dont la sortie est reliée à la masse par l'intermédiaire d'une résistance 89 et d'une autre diode électroluminescente LED2.

Le fonctionnement du circuit 34a décrit ci-dessus est le suivant. Lorsque le signal SpH a une amplitude qui se trouve dans la première fenêtre ΔpH, c'est-à-dire lorsque cette amplitude est comprise entre les valeurs pH1 et pH2 des potentiels des points P1 et P2, les sorties des amplificateurs 81, 82, qui fonctionnent en comparateurs, sont toutes deux à un niveau logique haut. Dans ce cas seulement, un signal A à un niveau logique haut apparaît en sortie de la porte 85 et la diode LED1 s'allume. Lorsque le signal SpH a une amplitude qui se trouve non seulement dans la première fenêtre, mais également dans la seconde ΔpH', un signal A' à un niveau logique haut apparaît en sortie de la porte 88 et la diode LED2 s'allume. Le préréglage du circuit 34a est réalisé en faisant circuler directement dans le détecteur de pH 19c l'éluant avec lequel la colonne est ultérieurement à équilibrer et en ajustant le potentiomètre PpH jusqu'à ce que la diode LED2 s'allume. La valeur de référence de pH correspond alors sensiblement au milieu de la fenêtre ΔpH. Ensuite, pour la détection de l'équilibrage de la colonne, on utilise uniquement le signal A qui indique que le pH se trouve entre les limites pH1 et pH2, dans la fenêtre ΔpH.

La structure et le fonctionnement du circuit 34b sont identiques à ceux du circuit 34a. Une diode électroluminescente LED'2 est utilisée pour le préréglage de ce circuit au moyen du potentiomètre PC0 lorsque l'éluant circule directement dans le détecteur de concentration 19b. Ensuite, au cours de l'équilibrage de la colonne, un signal B est produit et une diode LED'1 s'allume lorsque la concentration se trouve entre des limites CO1 et CO2 dans la fenêtre préréglée ΔCO.

Une porte 90 de type ET reçoit les signaux A et B et fournit un signal C lorsque le pH et la concentration mesurées se trouvent dans des limites prédéterminées. Afin d'éviter une détection intempestive due, par exemple, au passage d'une bulle d'air, le signal C n'est pas directement pris en compte mais déclenche un circuit monostable 91 qui, à son tour, déclenche un second circuit monostable 92. Le circuit 91 engendre une impulsion de durée relativement longue, par exemple une minute. Une telle durée est longue comparée au phénomène transitoire que représente le passage d'une bulle d'air mais courte comparée à la durée des phases d'un cycle de chromatographie. Le circuit 92 engendre une impulsion de durée beaucoup plus brève. Les sorties de la porte 90 et du monostable 92 sont reliées aux entrées d'une porte 93 de type ET. Le signal de sortie de la porte 93 est appliqué à une entrée d'une porte 94 de type ET et à une entrée X d'une bascule 95. En réponse au signal D de sortie de la porte 93, une borne de sortie de la bascule 95 passe au niveau logique bas, ce qui bloque la porte 94. Ainsi, dès que le signal C est présent, le monostable 91 est déclenché et si le signal C est encore présent à la fin de l'impulsion délivrée par ce monostable, le signal D est émis et une impulsion DE de détection d'équilibrage est produite en sortie de la porte 94. Le signal D déclenche par ailleurs la bascule 95 ce qui interdit la prise en compte de tout signal D ultérieur jusqu'à ce que la bascule 95 soit ré-enclenchée par un signal RS appliqué sur une entrée Y de la bascule 95.

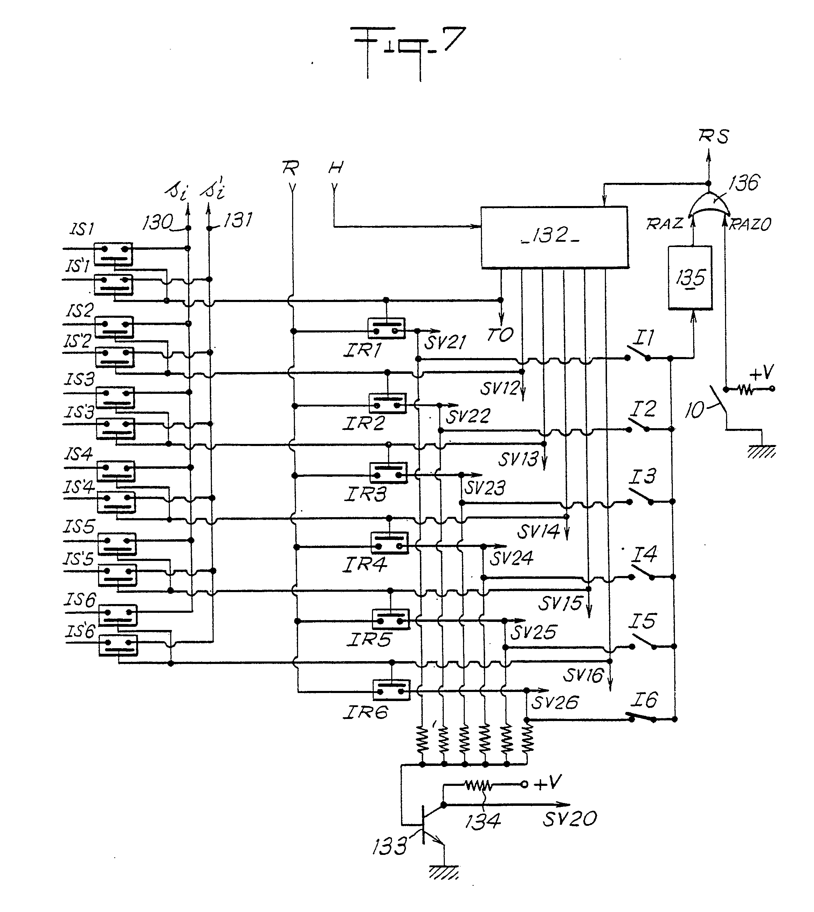

L'impulsion DE est reçue par le circuit 35 de commande d'injection d'échantillon (figure 5). Chacune des sondes SB10', SH10' comprend une paire de contacts espacés les uns des autres. L'un des contacts est à la masse tandis que l'autre est relié à un potentiel + V, par une résistance d'impédance élevée, et à une porte inverseuse, respectivement 101, 102. Les signaux SD1, SD2 des sondes SB10', SH10' sont inversés par les portes inverseuses 101, 102 dont la sortie passe au niveau logique haut lorsque les sondes sont mouillées. Les signaux de sortie des portes 101, 102 sont appliqués, d'une part, respectivement à deux portes inverseuses 103, 104 et, d'autre part aux deux entrées d'une porte 105 de type ET. Par ailleurs, les sorties des portes 103, 104 sont reliées aux deux entrées d'une porte 106 de type ET. La sortie de la porte 105 est au niveau logique haut lorsque les deux sondes SB10' et SH10' sont mouillées. Par contre, la sortie de la porte 106 est au niveau logique haut lorsque les sondes SB10' et SH10' sont sèches. Les signaux de sortie des portes 105 et 106 sont inversés par des portes inverseuses 107, 108 pour commander respectivement le déclenchement et le réenclenchement d'une bascule 109. Le signal apparaissant en sortie de la bascule 109 constitue le signal de commande SV10'. Ce même signal est inversé par une porte 110 et appliqué à l'entrée d'horloge d'un compteur par deux 111. Une sortie de ce compteur est reliée à une entrée d'une porte 112 de type ET dont une autre entrée est reliée à la sortie de la porte 110. Le signal de sortie de la porte 112, constitue le signal de commande SV10. Par ailleurs, la sortie de la porte 112 est également reliée à une porte inverseuse 114 dont le signal de sortie est appliqué à une porte 115 de type ET. Cette porte 115 reçoit sur une autre entrée un signal T0 provenant du circuit de commutation 37. Enfin, le signal DE est appliqué à l'entrée de remise à zéro du compteur 111.

Le fonctionnement du circuit 35 est le suivant. Les deux sondes SB10' et SH10' étant sèches, la sortie de la bascule 109 est au niveau haut, ce qui provoque l'apparition du signal SV10' ouvrant l'électrovanne V10'. Le produit à fractionner s'écoule par gravité dans le doseur 10'. Lorsque les deux sondes SB10' et SH10' sont mouillées, la bascule 109 change d'état. Le signal SV10' cesse et la sortie de la porte 110 passe au niveau haut.

Le compteur 111 est incrémenté d'une unité. Un signal au niveau logique bas est présent sur la sortie du compteur reliée à la porte 112. Dès l'apparition du signal DE, le compteur 111 est remis à zéro et un signal au niveau logique haut apparaît sur sa sortie. La sortie de la porte 112 passe alors au niveau haut, ce qui provoque l'apparition du signal SV10. Le produit s'écoule du récipient doseur 10'. Dès que les deux sondes SB10' et SH10' sont à nouveau sèches, la bascule 109 change d'état et le signal SV10 cesse ; la vanne V10 se ferme mais, par contre la vanne V'10 s'ouvre, ce qui autorise un nouveau remplissage du récipient doseur 10'. Une nouvelle injection d'une dose de produit à fractionner n'aura lieu qu'en réponse à un nouveau signal DE de détection d'équilibrage. La porte 114 inverse le signal V10 et autorise donc le passage du signal T0 à travers la porte 115 pour constituer le signal SV11 de commande d'ouverture de la vanne V11. Ainsi, le premier éluant contenu dans le récipient 11 peut éventuellement s'écouler dans la colonne avant l'injection d'une dose de produit à fractionner (équilibrage de la colonne avec le premier éluant) et après l'injection (phase de recueil de la première fraction).

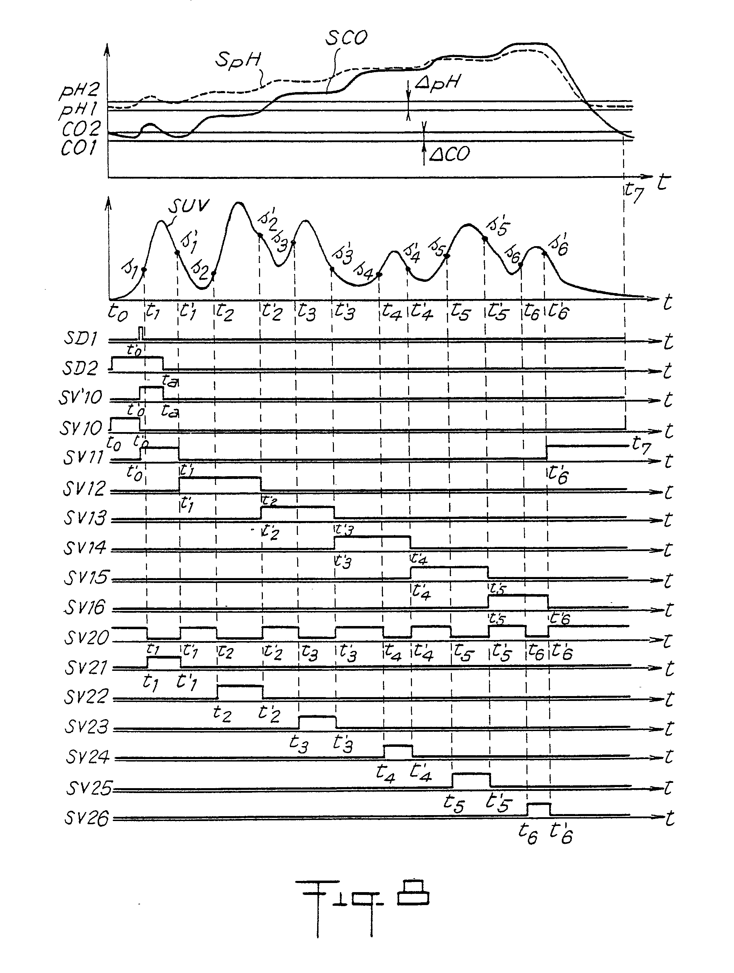

Le circuit 36 de commande de recueil de fraction (figure 6) reçoit le signal de mesure SUV transmis par le détecteur 19a à ultraviolets. Ce signal est amplifié par un amplificateur 120 et comparé à deux seuils $s_i$, $s'_i$ au moyen de deux comparateurs 121, 122. Les seuils $s_i$ et $s'_i$ sont les valeurs de seuil que doit franchir le signal SUV dans un sens (pour $s_i$) afin de commander le début du recueil d'une fraction puis dans l'autre sens (pour $s'_i$) afin de commander l'arrêt du recueil de cette fraction. Les valeurs $s_i$ et $s'_i$ peuvent être réglées indépendamment les unes des autres pour les différentes fractions à recueillir. Les signaux représentant les valeurs préréglées de $s_i$ et $s'_i$ correspondant à la fraction dont le recueil doit être commandé sont fournis par le circuit de commutation 37. Une porte inverseuse 123 est branchée en sortie du comparateur 121 pour déclencher un circuit monostable 124 lorsque le seuil $s_i$ est franchi dans le sens croissant, tandis que la sortie du comparateur 122 est reliée directement à un monostable 125 pour déclencher celui-ci lorsque le seuil $s'_i$ est franchi dans le sens décroissant. Les impulsions produites par les monostables 124, 125 sont appliquées à travers des portes 127, 128 de type ET aux entrées de déclenchement et de ré-enclenchement d'une bascule 126 qui produit en sortie un signal R de commande de recueil pendant l'intervalle de temps séparant les franchissements des seuils $s_i$ en sens croissant et $s'_i$ en sens décroissant. Une bascule 129 reçoit sur ses entrées les impulsions produites par les monostables 124, 125 respectivement directement et après passage dans la porte 128, et fournit, en sortie, un signal de commande des portes 127, 128. La bascule 129 est déclenchée en réponse à l'impulsion du monostable 124, afin d'ouvrir les portes 127 et 128 et est ré-enclenchée en réponse à l'impulsion du monostable 125, afin de fermer les portes 127, 128. Le signal R, ainsi que le signal H de sortie de la porte 128 sont transmis au circuit de commutation 37 décrit ci-après.

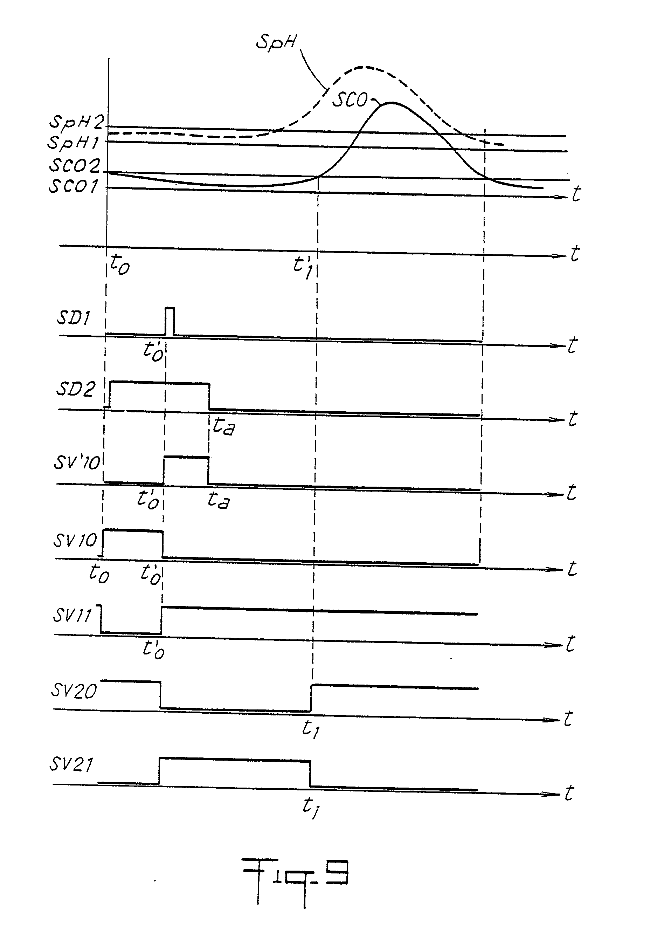

Le circuit 37 (figures 3 et 7) est relié à des potentiomètres PS1 à PS6 et PS'1 à PS'6 qui fournissent des signaux $s_1$ à $s_6$ et $s'_1$ à $s'_6$ représentant les valeurs de seuil de début de recueil et de fin de recueil pour les différentes fractions (cas d'un cycle de chromatographie avec six éluants). Le signal $s_i$ est délivré sur une borne de sortie 130 reliée aux potentiomètres PS1 à PS6 par l'intermédiaire d'interrupteurs commandés respectifs IS1 à IS6 de type analogique tandis que le signal $s'_i$ est délivré sur une borne de sortie 131 reliée aux potentiomètres PS'1 à PS'6 par l'intermédiaire d'interrupteurs commandés respectifs IS'1 à IS'6. Un compteur 132 reçoit le signal H sur son entrée d'horloge et comporte plusieurs sorties qui sont activées successivement à chaque incrémentation du compteur et qui délivrent les signaux T0 et SV12 à SV16. Les signaux T0 et SV12 à SV16 commandent, respectivement, la fermeture des couples d'interrupteurs (IS1-TS'1) à (IS6-IS'6) ainsi que, respectivement, la fermeture d'interrupteurs commandés IR1 à IR6 de type analogique. Les interrupteurs IR1 à IR6 reçoivent le signal R et délivrent respectivement les signaux SV21 à SV26. Ces différents signaux sont par ailleurs appliqués par l'intermédiaire de résistances respectives à la base d'un transistor 133 branché en émetteur commun et dont le collecteur, d'une part, est relié par une résistance 134 à une borne au potentiel + V et, d'autre part, délivre le signal SV20.

Le fonctionnement du circuit de commutation est le suivant. A la fin du recueil de la fraction correspondant à l'éluant de rang n (n compris entre 1 et 5), une impulsion H est produite, qui incrémente le compteur 132 d'une unité. Une nouvelle sortie de ce compteur est activée qui commande la fermeture des interrupteurs de rang n + 1 en vue du recueil de la fraction suivante. Dans les intervalles de temps entre deux impulsions R, le transistor 133 est bloqué puisqu'aucun signal de niveau logique haut n'est présent sur sa base. Le collecteur de ce transistor est donc au niveau haut et le signal SV20 est présent. De la sorte, la vanne V20 est ouverte et le récipient 20 recueille le liquide qui contient les constituants non intéressants du produit à fractionner. On notera que, dès la fin d'un recueil d'une fraction, la bascule 129 du circuit 36 interdit l'émission d'un signal H parasite, tel qu'il pourrait se produire si le nouveau seuil $s'_i$ validé à la fin du recueil est inférieur au précédent. Les portes 127 et 128 ne sont réouvertes qu'après le franchissement du nouveau seuil $s_i$. Lorsque la fraction correspondant au dernier éluant a été recueillie, le compteur 132 est ramené à l'état initial et le signal T0 est émis qui autorise l'admission du premier éluant en vue d'un nouvel équilibrage de la colonne.

Le retour à l'état initial du compteur 132 est commandé normalement par le front arrière d'une impulsion RAZ produite par un monostable 135. Des interrupteurs à commande manuelle I1 à I6 et à exclusion mutuelle reçoivent les signaux SV21 à SV26 sur leurs premières bornes et ont leurs secondes bornes reliées en commun à l'entrée du déclenchement du monostable 135. Si l'interrupteur I6 est fermé, les interrupteurs I1 à I5 étant ouverts, le front arrière du signal SV26 (fin du recueil de la sixième fraction) déclenche le monostable 135 qui, à son tour, ramène le compteur 132 à l'état initial. Dans le cas où le nombre d'éluants utilisés et de fractions à recueillir est différent de six, il suffit à l'opérateur de fermer celui des interrupteurs I1 à I6 correspondant à ce nombre. De cette manière, la fin d'un cycle de chromatographie (ré-équilibrage de la colonne) est automatiquement commandée après le recueil de la dernière fraction. La ré-initialisation du compteur 132 peut aussi être commandée par fermeture d'un interrupteur I0 pour appliquer un signal RAZ0 à l'entrée de remise à zéro du compteur 132, l'interrupteur I0 et le monostable 135 étant reliés à cette entrée à travers une porte 136 de type OU. Le signal de remise à zéro manuelle RAZ0 peut aussi être transmis au circuit 35 (figure 5) pour remettre à zéro le compteur 111. Le signal en sortie de la porte 136 forme également le signal RS appliqué à la bascule 95 du circuit 34 (figure 4).

Le déroulement d'un cycle de chromatographie à six paliers est illustré par la figure 8.

Arbitrairement, le début du cycle est choisi à l'instant $t_0$ où est produit le signal de détection d'équilibrage, c'est-à-dire lorsque le pH mesuré se trouve dans la plage (pH1, pH2) et que la concentration mesurée se trouve dans la plage (CO1, CO2) (voir les courbes représentant SpH et SC0). A l'instant $t_0$, l'électrovanne V10 est ouverte pour injecter une dose de produit à fractionner, les électrovannes V'10, V11 à V16 et V21 à V26 étant en position fermée et l'électrovanne V20 étant en position ouverte. Peu de temps après $t_0$, la sonde SH10' s'assèche et le signal SD2 passe au niveau haut.

A l'instant $t'_0$, la sonde SB10' s'assèche, le signal SD1 passe au niveau haut ce qui provoque la fermeture de l'électrovanne V10 (fin d'éjection du produit à fractionner) et l'ouverture des électrovannes V'10 (remplissage du doseur) et V11 (admission du premier éluant). Lorsqu'à l'instant $t_a$ les deux sondes SB10' et SH10' sont mouillées, l'électrovanne V'10 est fermée.

Les interrupteurs IS1, IS'1 et IR1 étant fermés, le recueil de la première fraction débute à l'instant $t_1$ lorsque le seuil $s_1$ est franchi vers le haut (voir courbe représentative de SUV). L'électrovanne V21 est ouverte tandis que l'électrovanne V20 est fermée. A l'instant $t'_1$, le seuil $s'_1$ est franchi vers le bas, ce qui provoque la fermeture des électrovannes V11 et V21, l'ouverture des électrovannes V12 et V20 et la fermeture des interrupteurs IS2, IS'2 et IR2 pour le recueil de la deuxième fraction.

Le cycle se poursuit ainsi, les électrovannes V22 à V26 étant ouvertes aux instants $t_2$ à $t_6$ de franchissement des seuils $s_2$ à $s_6$ et fermées aux instants $t'_2$ à $t'_6$ de franchissement des seuils $s'_2$ à $s'_6$. Les électrovannes V12 à V16 sont ouvertes aux instants $t'_1$ à $t'_5$ et fermées aux instants $t'_2$ à $t'_6$. L'électrovanne V20 est ouverte lorsque toutes les autres électrovannes de sortie sont fermées.

Après la fin du recueil de la sixième fraction (instant $t'_6$), l'électrovanne V11 est à nouveau ouverte pour un ré-équilibrage. Un nouveau cycle recommence à l'instant $t_7$ où la colonne est à nouveau en équilibre avec le premier éluant.

La figure 9 illustre un autre mode de mise en œuvre de l'invention dans le cas d'une chromatographie à deux paliers et de l'utilisation des deux détecteurs 19b et 19c seulement. Un seul récipient à éluant 11 et deux récipients collecteurs 20 et 21 sont utilisés.

Dans ce cas, les signaux SpH et SC0 sont utilisés, comme précédemment, pour détecter l'équilibrage de la colonne tandis que le signal SC0 est aussi utilisé pour commander la fin du recueil de la fraction à récupérer. Le début de la récupération coïncide avec la fin de l'admission du produit à fractionner. Ceci n'est vrai qu'avec l'utilisation de certaines résines dans la colonne, notamment celles décrites dans le brevet FR-A-2 378 808, lorsque la chromatographie à réaliser est une chromatographie de dessalage, la fraction correspondant au pic de concentration étant en fait la fraction à rejeter. Le produit à fractionner ayant été injecté (instant $t'_0$), on commande, comme ci-avant, un nouveau remplissage du doseur (instants $t'_0$ à $t_a$) et, d'autre part, l'ouverture de l'électrovanne V11, l'ouverture de l'électrovanne V21 et la fermeture de l'électrovanne V20.

Lorsqu'à l'instant $t_1$, la concentration dépasse un seuil donné (par exemple le seuil SCO2), l'électrovanne V21 est fermée tandis que l'électrovanne V20 est ouverte. La fraction à récupérer est celle recueillie dans le récipient 21 tandis que la fraction recueillie dans le récipient 20 est celle à mettre au rebut.

La vanne V11 étant toujours ouverte, un nouveau cycle recommence lorsque la colonne est à nouveau équilibrée avec l'éluant.

L'installation décrite plus haut présente l'avantage considérable de limiter les interventions de l'opérateur, pour une chromatographie donnée, au préréglage des seuils et à la surveillance des niveaux dans les récipients.

L'on sait que dans beaucoup de cas la séparation d'un constituant donné est réalisée par chromatographies successives. Dans ce cas, on associe un dispositif de commande et de sécurité particulier à chaque colonne. Du fait que la fraction récupérée dans un récipient collecteur d'une première colonne est utilisée comme produit à fractionner pour une deuxième colonne, on utilise ce récipient collecteur, en lui adjoignant un dispositif doseur, en tant que récipient à produit à fractionner pour la deuxième colonne.

**Revendications**

1. Installation automatique pour chromatographie liquide, comportant au moins une colonne de chromatographie, un récipient à produit à fractionner et au moins un récipient à éluant, ces récipients pouvant être mis en communication avec le sommet de la colonne par l'intermédiaire d'une pompe d'injection, des vannes d'alimentation commandées automatiquement montées entre la pompe d'injection et, respectivement, chacun des récipients à produit à fractionner et à éluant, un dispositif de détection branché en sortie de la colonne et fournissant au moins un signal de mesure représentatif d'une caractéristique du liquide sortant de la colonne, un dispositif de collection de fractions avec au moins un récipient collecteur pouvant être mis en communication avec le bas de la colonne, et une unité de commande recevant le signal de mesure et comprenant des moyens de commande du dispositif de collection de fractions, caractérisée en ce que :

un détecteur de niveau (S10 à S16) est associé à chacun des récipients à produit à fractionner (10) et à éluant (11 à 16) pour fournir un signal de niveau bas (SB0 à SB6) lorsque le niveau de liquide dans le récipient devient inférieur à un seuil prédéterminé,

au moins une vanne de sortie (V20 à V26) commandée automatiquement est montée entre la colonne (18) et le (ou les) récipient(s) collecteur(s) (20 à 26),

un dispositif doseur (10') est associé au récipient (10) à produit à fractionner pour permettre l'injection dans la colonne (18) à chaque fois d'une dose déterminée de ce produit, et,

l'unité de commande (30) comporte : un dispositif de commande (32) qui reçoit le ou chaque signal de mesure (SUV, SpH, SC0) fourni par le dispositif de détection (19a, 19b, 19c) et qui commande les vannes d'alimentation et de sortie (V10 à V16 et V20 à V26) et le dispositif doseur pour réaliser des cycles de chromatographie successifs comprenant chacun au moins les opérations consécutives d'injection dans la colonne d'une dose déterminée de produit à fractionner, d'admission d'éluant et de recueil d'une fraction ; et un dispositif de sécurité (31) relié aux détecteurs de niveau (S10 à S16) pour commander l'arrêt de la pompe et interdire l'admission de produit à fractionner ou d'éluant dans la colonne lorsque le détecteur de niveau correspondant produit un signal de niveau bas.

2. Installation selon la revendication 1, caractérisée en ce que le dispositif de détection comporte plusieurs détecteurs (19a, 19b, 19c) pour fournir différents signaux de mesure (SUV, SpH, SC0) représentatifs de différentes caractéristiques du liquide parvenant au bas de la colonne (18).

3. Installation selon l'une quelconque des revendications 1 et 2, dans laquelle le dispositif de commande comprend un comparateur pour déclencher le recueil d'une fraction lorsqu'un signal de mesure fourni par le dispositif de détection franchit dans un sens un premier seuil prédéterminé réglable, caractérisée en ce que le dispositif de commande comprend en outre un second comparateur pour interrompre le recueil de la fraction lorsque le signal de mesure franchit dans l'autre sens un second seuil prédéterminé réglable indépendamment du premier.

4. Installation selon l'une quelconque des revendications 1 à 3, caractérisée en ce que le dispositif de commande (32) comprend des moyens qui commandent l'émission d'un éluant dans la colonne et des moyens (34) de détection d'équilibrage de la colonne avec cet éluant, ces derniers moyens réagissant à au moins un signal de mesure (SpH, SC0) pour commander l'injection d'une dose de produit à fractionner.

5. Installation selon la revendication 4, caractérisée en ce que les moyens de détection d'équilibrage comportent un dispositif de comparaison recevant ce signal de mesure et fournissant un signal de sortie lorsque l'amplitude du signal de mesure est comprise dans une plage déterminée réglable.

6. Installation selon l'une quelconque des revendications 4 et 5, caractérisée en ce que les moyens de détection d'équilibrage comportent un circuit d'élimination de détections intempestives.

7. Installation selon l'une quelconque des revendications 1 à 6, caractérisée en ce qu'elle comporte plusieurs récipients à éluant (11 à 16) et le dispositif de commande (32) reçoit le ou les signaux de mesure du dispositif de détection pour commander des cycles successifs comprenant chacun : l'injection d'une dose déterminée d'échantillon, l'admission d'un premier éluant dans la colonne, le recueil d'une première fraction, l'admission d'un deuxième éluant dans la colonne, le recueil d'une deuxième fraction, le cas échéant au moins un sous-cycle supplémentaire comprenant l'admission d'un autre éluant dans la colonne et le recueil de la fraction correspondante, et enfin l'admission du premier éluant dans la colonne pour rééquilibrer celle-ci avant le début du cycle suivant.

8. Installation selon la revendication 7, caractérisée en ce que le dispositif de commande comprend des moyens de commande d'admission d'éluant agissant en réponse à la fin de l'injection d'une dose de produit à fractionner ou à la fin du recueil d'une fraction.

9. Installation selon l'une quelconque des revendications 1 à 8, caractérisée en ce qu'elle comporte plusieurs récipients collecteurs (20 à 26) qui sont chacun associés à une vanne de sortie particulière (V20 à V26), commandée par le dispositif de commande pour mettre le récipient en communication avec la colonne, et à un détecteur de niveau (S20 à S26) qui est destiné à fournir un signal de niveau haut (SH0 à SH6) lorsque le niveau de liquide dans le récipient devient supérieur à un seuil prédéterminé, et est relié au dispositif de sécurité (31).

10. Installation selon l'une quelconque des revendications 1 à 9, caractérisée en ce que le dispositif de détection comprend un détecteur de concentration comportant un tube (40) dans lequel peut circuler le liquide sortant de la colonne, une bobine (45) placée autour du tube, et un circuit de mesure des variations d'inductance de la bobine (45).

11. Installation selon l'une quelconque des revendications 1 à 10, caractérisée en ce qu'elle comporte plusieurs colonnes de chromatographie, chacune avec sa propre unité de commande, et en ce qu'un dispositif doseur est adjoint à un récipient collecteur associé à une colonne pour constituer le récipient à produit à fractionner servant à alimenter une autre colonne.

12. Installation selon l'une quelconque des revendications 1 à 11, caractérisée en ce que le doseur comporte un récipient (10') qui est muni de deux sondes (SB10', SH10') placées à des niveaux différents et qui peut être relié, d'une part au récipient (10) de produit à fractionner, par une première vanne (V'10), et, d'autre part, à la colonne (18), par l'intermédiaire d'une seconde vanne (V10), et en ce que le dispositif de commande comporte un circuit (35) qui reçoit les signaux (SD1, SD2) des deux sondes de niveau associées au doseur (10') et un signal de commande (DE) et qui commande les vannes (V10, V'10) pour introduire dans le récipient doseur (10') ou soutirer de celui-ci une quantité de liquide correspondant à la différence des niveaux des sondes (SB10', SH10').

## Claims

1. Automatic installation for liquid chromatography, comprising at least a chromatography column, a container of product to be fractionated, and at least a container of eluant, said containers being adapted to communicate with the top of the column via an injection pump, automatically controlled supply valves mounted between the injection pump and respectively, each of the containers of product to be fractionated and of eluant, a detecting device connected with the outlet of the column and supplying at least a measuring signal representative of a characteristic of the liquid flowing out of the column, a device for collecting the fractions with at least a collecting container adapted to communicate with the bottom part of the column, and a control unit receiving the measuring signal and comprising means for controlling the fractions-collecting device, characterized in that :

a level detector (S10 to S16) is associated with each of the containers of product to be fractionated (10) and of eluant (11 to 16), and supplies a low level signal (SB0 to SB6) when the level of the liquid contained in the container is below a predetermined threshold,

at least an automatically controlled outlet valve (V20 to V26) is mounted between the column (18) and the collecting container or containers (20 to 26),

a dosing device (10') is associated with the container (10) of product to be fractionated to allow every time the injection into the column (18) of one predetermined dose of the product, and the control unit (30) comprises : a control device (32) receiving the or each measuring signal (SUV, SpH, SC0) issued by the detecting device (19a, 19b, 19c) and controlling the supply and outlet valves (V10 to V16 and V20 to V26) and the dosing device to perform successive chromatography cycles, each comprising at least the sequential operations of injecting into the column a predetermined dose of product to be fractionated, of admitting eluant and of collecting a fraction ; and a safety device (31) connected to the level detectors (S10 to S16) to control the stoppage of the pump and to prevent the admission of the product to be fractionated or eluant into the column when the corresponding level detector issues a low level signal.

2. Installation according to claim 1, characterized in that the detection device comprises a plurality of detectors (19a, 19b, 19c) to issue different measuring signals (SUV, SpH, SC0) representative of different characteristics of the liquid arriving at the bottom of the column (18).

3. Installation according to any one of claims 1 and 2, in which the control device comprises a comparator to initiate the collection of a fraction when a measuring signal issued by the detection device goes in one direction beyond a first adjustable predetermined threshold, characterized in that the control device further comprises a second comparator to interrupt the collection of the fraction when the measuring signal goes in the other direction beyond a second predetermined threshold adjustable independently of the first threshold.

4. Installation according to any one of claims 1 to 3, characterized in that the control device (32) comprises means controlling the release of an eluant into the column and means (34) for detecting the balancing of the column with said eluant, said last means reacting to at least one measuring signal (SpH, SC0) for controlling the injection of a dose of product to be fractionated.

5. Installation according to claim 4, characterized in that the balancing-detection means comprise a comparison device receiving said measuring signal and supplying an output signal when the amplitude of the measuring signal is within an adjustable predetermined range.

6. Installation according to any one of claims 4 and 5, characterized in that the balancing-detection means comprise a circuit for eliminating ill-timed detections.

7. Installation according to any one of claims 1 to 6, characterized in that it comprises a plurality of containers of eluant (11 to 16) and the control device (32) receives the measuring signal or signals from the detection device to control the successive cycles, each one comprising : injection of a predetermined dose of sample, admission of a first eluant into the column, collection of a first fraction, admission of a second eluant into the column, collection of a second fraction, and if necessary at least an additional subcycle comprising the admission of another eluant into the column and the collection of the corresponding fraction, and finally the admission of the first eluant into the column to rebalance said column before next cycle begins.

8. Installation according to claim 7, characterized in that the control device comprises means for controlling the admission of eluant acting in response to the end of injection of a dose of product to be fractionated or to the end of collection of a fraction.

9. Installation according to any one of claims 1 to 8, characterized in that it comprises a plurality of collecting containers (20 to 26) each one being associated with a particular outlet valve (V20 to V26) controlled by the control device for placing the container in communication with the column, and with a level detector (S20 to S26) designed to issue a high level signal (SH0 to SH6) when the level of liquid in the container is higher than a predetermined threshold, said detector being connected to the safety device (31).

10. Installation according to any one of claims 1 to 9, characterized in that the detection device comprises a concentration detector comprising a tube (40) in which the liquid flowing out of the column can circulate, a coil (45) placed around the tube and a circuit for measuring the variations of inductance of the coil (45).

11. Installation according to any one of claims 1 to 10, characterized in that it comprises a plurality of chromatography columns, each one with its own control unit, and in that a dosing device is coupled to a collector container associated with a column to constitute the container of product to be fractionnated used to supply another column.

12. Installation according to any one of claims 1 to 11, characterized in that the dosing device comprises a container (10') which is equipped with two probes (SB10', SH10') placed at different levels, and which can be connected, on the one hand to the container (10) of product to be fractionated, via a first valve (V10'), and on the other hand, to the column (18), via a second valve (V10), and in that the control device comprises a circuit (35) receiving the signals (SD1, SD2) from the two level probes associated with the dosing device (10'), and a control signal (DE), and controlling the valves (V10, V'10) for introducing into the dosing container (10') or withdrawing therefrom a quantity of liquid corresponding to the difference in the levels of the probes (SB10', SH10').

## Patentansprüche

1. Automatische Anlage für Flüssigkeitschromatograpie mit mindestens einer Chromatograpiekolonne, einem Behälter für das zu fraktionierende Produkt und mindestens einem Behälter für ein Extraktionsmittel, wobei diese Behälter mit der Spitze der Kolonne in Verbindung gebracht werden können, mittels einer Einspritzpumpe, Versorgungsventile, die automatisch gesteuert und zwischen der Einspritzpumpe und jedem der Behälter des zu fraktionierenden Produktes bzw. des Extraktionsmittels, angeordnet sind, der am Ausgang der Kolonne angeschlossen ist und mindestens ein Meßsignal liefert, das repräsentativ für eine Kenngröße der aus der Kolonne austretenden Flüssigkeit ist, eine Vorrichtung zum Sammeln der Fraktion mit mindestens einem Sammelbehälter, der mit dem unteren Teil der Kolonne in Verbindung gebracht werden kann und eine Steuereinheit, die das Meßsignal empfängt und Steuerorgane für die Vorrichtung zum Sammeln der Fraktion aufweist, dadurch gekennzeichnet,

daß ein Pegeldetektor (S10 bis S16) mit jedem der Behälter des zu fraktionierenden Produkts (10) und des Extraktionsmittels (11 bis 16) verbunden ist, um ein Signal zu liefern, das anzeigt, daß der Pegel niedri ist (SB0 bis SB6), wenn der Flüssigkeitspegel in dem Behälter unterhalb eines vorbestimmten Schwellenwerts sinkt,

mindestens ein Ausgangsventil (V20 bis V26), das automatisch gesteuert ist, zwischen der Kolonne (18) und dem (oder den) Sammelbehälter bzw. Sammelbehältern (20 bis 26) angeordnet ist,

eine Dosiervorrichtung (10') mit dem Behälter (10) für das zu fraktionierende Produkt verbunden ist, um die Einspritzung einer vorbestimmten Dosis dieses Produkts zu gewährleisten, und

eine Steuereinheit (30) mit einer Steuervorrichtung (32), die das oder jedes Meßsignal (SUV, SpH, SC0) empfängt, das von dem Detektor (19a, 19b, 19c) geliefert wird, die Speise- bzw. Auslaßventile (V10 bis V16 und V20 bis V26) steuert und die Dosiervorrichtung, um aufeinanderfolgende Chromatograpiezyklen zu bilden, die jeweils mindestens aufeinanderfolgende Einspritzungen des zu fraktionierenden Produkts mit einer vorbestimmten Dosis in die Kolonne, das Zuleiten des Extraktionsmittels und das Sammeln einer Fraktion beinhalten und wobei die Vorrichtung eine Sicherheitsvorrichtung (31) aufweist, die mit dem Pegeldetektoren (S10 bis S16) verbunden ist, um das Anhalten der Pumpe zu steuern und den Einlaß des zu fraktionierenden Produkts oder des Extraktionsmittels in die Kolonne zu unterbinden, wenn der entsprechende Pegeldetektor ein einem niedrigen Pegel entsprechendes Signal abgibt.

2. Anlage nach Anspruch 1, dadurch gekennzeichnet, daß die Detektorvorrichtung mehrere Detektoren (19a, 19b, 19c) aufweist, um verschiedene Meßsignale (SUV, SpH, SC0) liefert, die verschiedene Kennwerte der Flüssigkeit wiedergeben, die im unteren Teil der Kolonne (18) auftritt.

3. Anlage nach einem der Ansprüche 1 und 2, bei der die Steuervorrichtung einen Vergleicher zum Auslösen des Sammelns einer Fraktion aufweist, während ein Meßsignal, das von der Erfassungsvorrichtung geliefert wird, in einer Richtung eine erste vorbestimmte einstellbare Schwelle überschreitet, dadurch gekennzeichnet, daß die Steuervorrichtung ferner einen zweiten Vergleicher aufweist, zum Unterbrechen des Sammelns der Fraktion, wenn das Meßsignal einen zweiten einstellbaren vorbestimmten Schwellenwert, der unabhängig von dem ersten Schwellenwert ist, in der anderen Richtung überquert.

4. Anlage nach einem der Ansprüche 1 bis 3, dadurch gekennzeichnet, daß die Steuervorrichtung (32) Mittel aufweist, die das Einlassen des Extraktionsmittels in die Kolonne steuert und Mittel (34) zur Detektion der Abgleichung der Kolonne mit diesem Extraktionsmittel, wobei diese letzteren Mittel auf mindestens ein Meßsignal reagieren (SpH, SC0) um die Einspritzung einer Dosis des zu fraktionierenden Produkts zu steuern.

5. Anlage nach Anspruch 4, dadurch gekennzeichnet, daß die Mittel zur Erfassung des Abgleichs eine Vergleichervorrichtung aufweisen, die das Meßsignal empfängt und ein Ausgängssignal liefert, wenn die Amplitude des Meßsignals innerhalb eines einstellbaren vorbestimmten Bereichs liegt.

6. Anlage nach einem der Ansprüche 5 und 6, dadurch gekennzeichnet, daß die Mittel zur Erfassung des Abgleichs eine Signalunterdrückungsschaltung aufweist.

7. Anlage nach einem der Ansprüche 1 bis 6, dadurch gekennzeichnet, daß sie mehrere Behälter eines Extraktionsmittels (11 bis 16) aufweist und daß die Steuervorrichtung (32) das oder die Meßsignale des Detektors empfängt, um die aufeinanderfolgenden Zyklen zu steuern, von denen jeder umfaßt : Die Einspritzung einer vorbestimmten Probedosis, das Einlassen eines ersten Extraktionsmittels in die Kolonne, das Sammeln einer ersten Fraktion, das Einlassen eines zweiten Extraktionsmittels in die Kolonne, das Sammeln einer zweiten Fraktion, wobei ggf. ein zusätzlicher Unterzyklus erfolgen kann, der die Zulassung eines anderen Extraktionsmittels in die Kolonne und das Sammeln der entsprechenden Fraktion umfaßt, und schließlich das Zulassen des ersten Extraktionsmittels in die Kolonne, um diese vor dem Beginn des folgenden Zyklus wieder ins Gleichgewicht zu bringen.

8. Anlage nach Anspruch 7, dadurch gekennzeichnet, daß die Steuervorrichtung Steuerorgane für die Zulassung des Extraktionsmittels aufweist, die auf das Ende der Einspritzung einer Dosis des zu fraktionierenden Produkts oder auf das Ende des Aufsammelns einer Fraktion anspricht.

9. Anlage nach einem der Ansprüche 1 bis 8, gekennzeichnet durch mehrere Sammelbehälter (20 bis 26), die jeweils mit einem besonderen Ausgangsventil (V20 bis V26) verbunden sind, die von der Steuervorrichtung gesteuert werden, um den Behälter mit der Kolonne in Verbindungzu setzen und die jeweils verbunden sind mit einem Pegeldetektor (S20 bis S26), der da zu bestimmt ist, ein Signal bei einem hohen Pegel (SH0 bis SH6) anzugeben, wenn der Flüssigkeitspegel im Behälter höher als eine vorbestimmte Schwelle ist, und der an eine Bescheidsvorrichtung (31) angeschlossen ist.

10. Anlage nach einem der Ansprüche 1 bis 9, dadurch gekennzeichnet, daß die Detektorvorrichtung einen Detektor der Konzentration aufweist, mit einem Rohr (40), in dem die aus der Kolonne austretende fließt, eine Spule (45), die um dieses Rohr herum angeordnet ist und eine Meßschaltung zum Messen der Induktivitätsänderung der Spule (45).

11. Anlage nach einem der Ansprüche 1 bis 10, gekennzeichnet durch mehrere Chromatograpiekolonnen, die jeweils eine eigene Steuereinheit aufweisen und wobei eine Dosiervorrichtung einem Sammelbehälter zugeordnet ist, der mit jeder Kolonne verbunden ist, um den Behälter des zu fraktionierenden Produkts bildet und dazu dient, eine andere Kolonne zu speisen.

12. Anlage nach einem der Ansprüche 1 bis 11, dadurch gekennzeichnet, daß der Dosierer einen Behälter (10') aufweist, der mit zwei Sonden (AB10', SH10') versehen ist, die auf zwei verschiedenen Pegeln angeordnet sind und die einerseits mit dem Behälter (10) des zu fraktionierenden Produkts über ein erstes Ventil (V'10) und andererseits mit der Kolonne (18) über eine zweites Ventil (V10) verbunden werden kann, und dadurch, daß die Steuervorrichtung eine Schaltung (35) aufweist, die Signale (SD1, SD2) der beiden Pegelsonden, die mit dem Dosierer (10') verbunden sind und einem Steuersignal (DE) empfängt, das die Ventile (V10, V'10) steuert, um eine Flüssigkeitsmenge, die der Differenz der Pegel der Sonden (SB10', SH10') entspricht, in den Dosierbehälter (10') einzuführen oder aus diesem abzulassen.

Fig. 1

Fig. 2

Fig. 3

Fig. 4

**0 107 544**

Fig. 5

Fig. 6

4

Fig_7

0 107 544

6

Fig.9